# EUROPEAN PATENT APPLICATION

(11) **EP 1 488 893 A2**
(43) Date of publication of application: **22.12.2004**
(21) Application number: 04253432.1
(22) Date of filing: 09.06.2004
(51) Int. Cl.: B25J 9/16, H01R 43/20

(54) **Connector gripping device, connector inspection system comprising the device, and connector connection system**

(30) Priority: 17.06.2003 JP 2003172332
(71) Applicant: FANUC LTD, Minamitsuru-gun, Yamanashi 401-0597 (JP)
(72) Inventor: Hariki, Kazuo Room 12-601 FANUC Manshonharimomi, Minamitsuru-gun Yamanashi, 401-0511 (JP); Otsuka, Kazuhisa Room 8-104 FANUC Manshonharimomi, Minamitsuru-gun Yamanashi, 401-0511 (JP); Oda, Masaru Room 12-104 FANUC Manshonharimomi, Minamitsuru-gun Yamanashi, 401-0511 (JP)
(74) Representative: Billington, Lawrence Emlyn

(57) **Abstract**

An intermediate portion of a cable (1) with a connector (3) at a distal end portion (2) of the cable (1) is pinched by a pair of rolls (11r) of a first hand (11) of a first robot (10), such that the connector (3) provided on the cable (1) is positionally fixed by causing the first hand (11) to approach the cable (1) and to grip the cable (1) by pinching the intermediate portion thereof. An image of the connector (3) is obtained by a first camera (31) and a position and posture of the connector (31) are thereby found. A second robot (20) is moved to a gripping position which has been corrected based on the found position an posture of the connector (31), thereby causing a second hand (21) of the second robot (20) to grip the connector (31) at an outer lateral periphery thereof.

## Description

### BACKGROUND OF THE INVENTION

### Field of the Invention

The present invention relates to an automation technology related to an inspection and a connection operation of a connector of a cable with connector, and it relates more in detail to a device for accurately gripping the connector of the cable with connector by using a robot equipped with a hand and a visual sensor and the like, and a connector inspection system and a connector connection system by using this device.

### Description of the Related Art

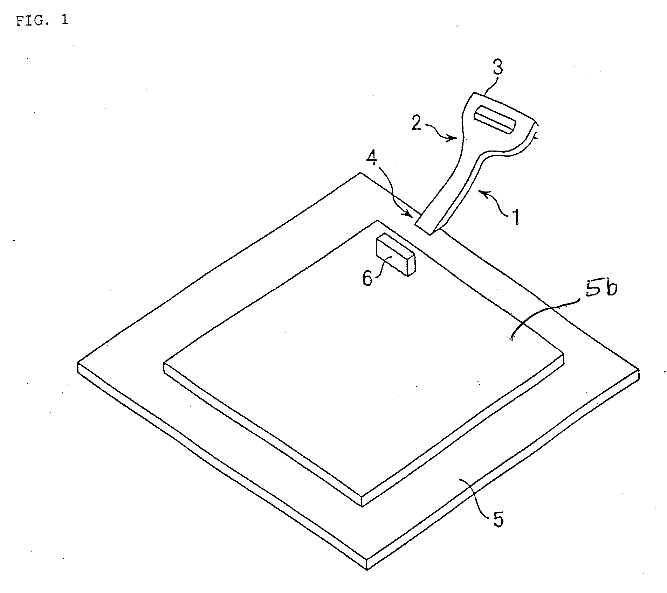

As one of the operations required in an assembly process and the like of various devices, there is a connection operation of the connector of a cable with connector. FIG. 1 illustrates by an example a cable with connector and another connector to which this cable with connector is connected (hereinafter, referred to as "companion connector"). As shown in this drawing, one end portion (distal end portion) 2 of a cable 1 with connector is provided with a connector 3, and the other end portion 4 (base end portion) of the cable with a connector on the side opposite this connector 3 is fixed to a member 5 such as a board and the like. On the other hand, the companion connector 6 is mounted on this member 5.

In a non-limiting example of the arrangement shown in FIG. 1, member 5 is a substrate of a liquid crystal panel, while reference symbol 5b denotes a control substrate for controlling the substrate 5 of a liquid crystal panel. An electric companion connector 6 is mounted on the control substrate 5b.

The cable 1 with connector is a control signal cable of the substrate 5, and the electric connector 3 is provided on the cable 1 with connector at the distal end portion 2 of the cable 1. The base end 4 of the cable 1 with connector is wired to the substrate 5, with the result that the base end portion 4 of the cable 1 with connector is restrained to the substrate 5. The cable 1 is tabular in shape, i.e. it has the shape of a flat plate or strip.

By connecting the connector 3 of the cable 1 with connector, wired to the substrate 5 of a liquid crystal panel, to the companion connector 6 mounted on the control substrate 5b, the substrate 5 is electrically connected to the control substrate 5b.

In such a case as described above, the connector 3 of the cable 1 with connector is gripped so as to be fitted (engaged, inserted and the like) to the companion connector 6, thereby making it possible to perform the connection operation of the cable 1 with connector. However, in general, the cable 1 with connector has a deformation freedom of bending and torsion, an error attributable to machining accuracy and the like, and therefore, even if a plurality of cables 1 with connector and the member 5 attached with the companion connector 6 are supplied in order at a definite position in a definite posture, it is inevitable that there occurs a fairly large variation in the position and posture of the connector 3 of the cable 1 with connector.

Consequently, in the case where the connection operation of the cable 1 with connector is performed by using a robot, first, it is not easy to accurately grip the connector 3 which is attached to the cable 1 with connector, and this complicates the automation of the connection operation by the robot. There has not yet been proposed a technology which simply solves such a problem as arising from the instability of the position and posture of the connector on the side of the cable with connector, and the operation has eventually depended upon a manual operation.

### SUMMARY OF THE INVENTION

The present invention provides a gripping device which can accurately grip a connector provided to a cable with connector when one end portion of the cable with connector on the side opposite the connector is fixed to a member. Further, the present invention provides a connector inspection system which can perform the inspection of a connector griped by using a gripping device and a visual sensor, and also a connector connection system for connecting a griped connector to a companion connector. With the present invention which provides the above device and systems, automation of connector inspection operation and connection operation of a cable with connector is made easy, thereby making it possible to reduce the number of man-hours of the assembly operation and the like and stabilize the operation quality.

In the present invention, the connector of a cable with connector is not gripped directly, but an intermediate portion between the base end portion and the distal end portion of the cable with connector, which has small instability in the position and posture as compared with the distal end portion (or the end portion on the side of the connector of the cable with connector), is first gripped by a first robot hand, and after that, the robot hand is caused to move toward the connector while gripping the cable with connector loosely, as a result, the connector is confined within a predetermined range so as to allow a second robot to grip this connector.

The position and posture of the connector confined (fixed) within a predetermined region can be detected accurately by a first visual sensor, so that gripping of the connector can be carried out using the detection result. Further, inspection of the griped connector can be carried out using a second visual sensor. Further, the griped connector can also be engaged with a companion connector.

More specifically, the present invention is first applied to a device which grips a connector provided to a cable (cable with connector) when one end portion of the cable with connector on the side opposite the connector is fixed to a member.

The gripping device according to the present invention comprises: means for confining the position of the connector provided to a cable with connector within a predetermined spatial region using a first robot having a first hand of which gripping unit grips an intermediated portion of the cable with connector and moves toward the connector while keeping contact with the cable with connector; a first visual sensor for detecting the position and posture of the connector confined within the spatial region; andmeans for gripping the connector by a second hand mounted on a second robot based on the detected position and posture.

Here, in case where the shape of the cable is tabular, and the position and posture of the connector confined within the predetermined spatial region is approximately limited to a first position and posture or a second position and posture, in association with the orientation of the tabular cable, the first visual sensor may determine whether the connector is approximately in the first position and posture or the second position and posture.

Typically, the gripping unit of the first hand comprises a pair of rollers. Further, the imaging unit of the first visual sensor may be mounted on the second robot.

Next, an inspection system of the present invention can be constituted by combining the aforementioned connector gripping device and the second visual sensor for inspecting the connector gripped by the connector gripping device. In this case, the imaging unit of the second visual sensor may be mounted on the first robot. Further, the control unit of the first visual sensor may also serve as the control unit of the second visual sensor. Furthermore, the connector connection system of the present invention can be constituted by combining means for determining a connector gripping discrepancy caused by the second hand by using the connector gripping device and the second visual sensor for detecting the position and posture of the connector gripped by this connector gripping device andmeans for correcting the position and posture of the second robot based on the determined connector gripping discrepancy and connecting the connector to the companion connector located at the predetermined position and posture by the second hand. Here, the connector gripping discrepancy caused by the second hand can be determined based on the position and posture of the connector detected by the second visual sensor and the position and posture of the second hand at that time.

Further, the imaging unit of the second visual sensor may be mounted on the first robot. Further, a third visual sensor for detecting the position and posture of the companion connector may be provided so that the detected position and posture can be taken as the predetermined position and posture. The second visual sensor may also serve as the third visual sensor. The control unit of the first visual sensor may also serve as the control unit of the second visual sensor and the control unit of the third visual sensor.

### BRIEF DESCRIPTION OF THE DRAWINGS

The forgoing and other obj ects and feature of the invention will become more apparent from the following description of preferred embodiments of the invention with reference to the accompanying drawings, in which:
FIG. 1 is a view showing a cable with connector and a companion connector to which the connector of the cable with connector is connected;
FIG. 2 is a schematic diagram showing the arrangement of main elements constituting a system according to one embodiment of the present invention;
FIG. 3 is a block diagram showing constituent elements of the system shown in FIG. 2;
FIG. 4 is a view for explaining an operation in which inspection of the connector of the cable with connector is performed by using the system according to one embodiment of the present invention;
FIG. 5 is a view for explaining an operation in which connection of the connector of the cable with connector is performed by using the system according to one embodiment of the present invention; and
FIG. 6 is a view for explaining the continuation of the operation of FIG. 5.

### DESCRIPTION OF THE EMBODIMENTS

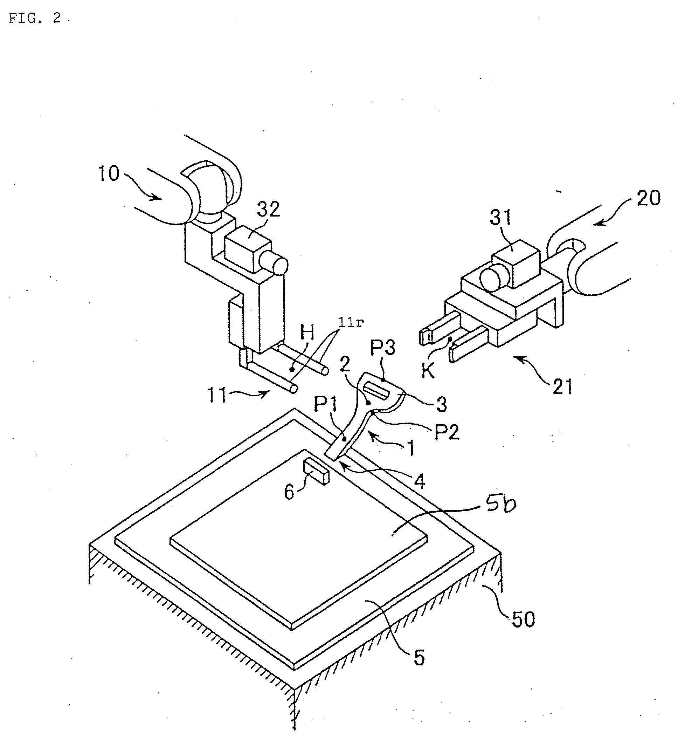

FIG. 2 shows a main portion of the configuration of a system according to one embodiment of the present invention. Referring to this drawing, a substrate workpiece equipped with a cable with connector, which is an object of an inspection or connection operation according to the present embodiment, is supplied to a table (working table) 50 in succession by supplying and conveying means (not shown). Examples of the shapes of a cable 1 with connector and a substrate 5 are shown in FIG. 1.

As shown in FIG. 1, a connector 3 is provided to the cable 1 with connector at one end portion (distal end portion) thereof. The cable 1 with connector is fixed to the substrate 5 at the other end (base end) on the side opposite the connector 3. On the other hand, a companion connector 6 is provided on the substrate 5. The substrate workpiece including the cable 1 with connector, the substrate 5 and the companion connector 6 is positioned on the table 50 with a rough accuracy. Accordingly, the position of the base end 4 of the cable 1 with connector is fixed. However, the position of the intermediate portion of the cable 1 with connector, which extends from the base end toward the distal end, is not fixed, so that positional variation of a corresponding region of individual cables 1 with connector widens as it approaches to the distal end thereof. As a result, the range of position and posture within which the connector 3 of the cable 1 with connector may assume considerably widens.

To perform the inspection operation or the connection for the substrate workpiece supplied in such a state, a first robot 10 and a second robot 20 are assigned on the periphery of the table 50. A first hand 11 is attached to the first robot 10 at the arm top end thereof, and a second hand 21 is attached to the second robot 20 at the arm top end thereof. It should be noted that each of the robots 10 and 20 is shown only with the arm top end and its periphery owing to convenience of illustration.

The first hand 11, which is adopted in an embodiment of the present invention, can grip an intermediate region of cable 1 with connector, and also slip the cable 1 while gripping the cable 1 with connector. In this case, as illustrated in FIG. 2, a hand which has a gripping unit comprising a pair of rotatable rolls 11r is used as the first hand 11. The second hand 21, which is adopted in an embodiment of the present invention, has a gripping unit capable of gripping firmly and fixedly the connector 3. Further, each of the robots 10 and 20 is mounted respectively with a camera as an imaging unit of a visual sensor. Owing to convenience of the explanation, a camera 31 mounted on the second robot 20 is referred to as a first camera, and a camera 32 mounted on the first robot is referred to as a second camera.

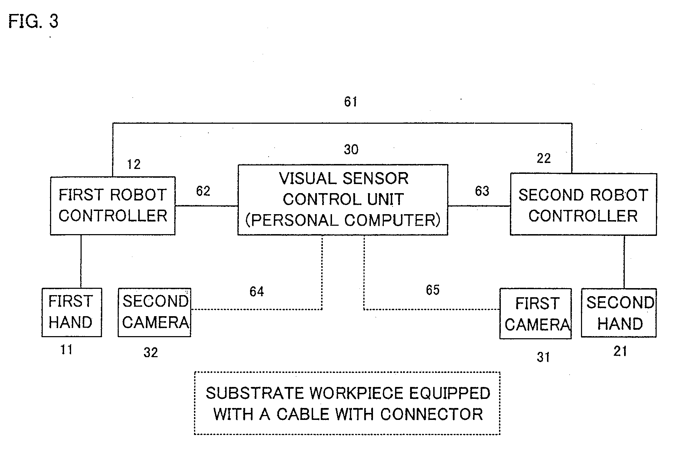

FIG. 3 is a block diagram explaining a constitution of the system having the above described configuration. In this drawing, reference numeral 12 denotes a first robot controller for controlling the first robot 10 (refer to FIG. 1), and reference numeral 22 denotes a second robot controller for controlling the second robot 20 (refer to FIG. 1). Note that, in FIG. 3, the illustration of the first robot 10, the second robot 20, and the connection lines connecting these robots 10 and 20 to their robot controllers 12 and 22 is omitted.

The robot controllers 12 and 22 are connected to each other through a communication line 61, and also connected to a visual sensor control unit 30 comprising a personal computer through net lines 62 and 63, allowing necessary commands and data to be exchanged between the robots 10 and 20 and between each of the robots 10 and 20 and the visual sensor control unit 30. Further, the first camera 31 and the second camera 32 are connected to the visual sensor control unit 30 respectively through lines 64 and 65 for use of a serial signal. Each of the cameras 31 and 32 performs an imaging by an imaging command from the visual sensor control unit 30 and sends an image to the visual sensor control unit 30.

The visual sensor control unit 30 has a conventional image data processing function, and analyzes the image obtained by the first camera 31 or the second camera 32, as described later, and calculates the positions and postures of the connector 3 and the companion connector 6 and determines (or inspects) an abnormality of the connector 3, and sends the result to the first robot controller 12 or the second robot controller 22. Further, the first hand 11 and the second hand 21 are connected to the first robot controller 12 and the second robot controller22,respectively,and open/close operation of these hands 11 and 21 are controlled by the signal from each robot controller 12 and 22, respectively.

Hereinafter, essential points of the procedure to be taken in the case of inspecting the connector 3 and in the case of connecting the connector 3 to the companion connector, by using the above-described system, will be described below. Further, as preparation for an operation steps to be described below, the positions (including the postures) shown in FIG. 2 with reference characters P1 and P2 are taught in advance to the first robot 10 (the first robot controller 12).

Further, the position (including the posture) shown by reference character P3 is taught in advance to the second robot 20 (the second robot controller 22). Here, P1 corresponds to a position for gripping (pinching) first an intermediate portion of the cable 1 with connector by the first hand 11, and P2 is a teaching point designated for allowing the first hand 11 to approach the connector 3 after gripping (pinching) the cable 1 with connector at an intermediate portion thereof, and is set at a point approaching, from an average position in which the connector 3 exists, to the point P1 by a small distance. The distance between P1 and P2 becomes slightly smaller than the distance from the gripped midstream region to the top end portion 2. Further, P3 corresponds to a gripped position by the second hand 21 corresponding to the average position in which the connector 3 exists. Note that, as appended in FIG. 2, tool center points H and K of respective robots are set in the vicinity of the gripping point of respective hands 11 and 21.

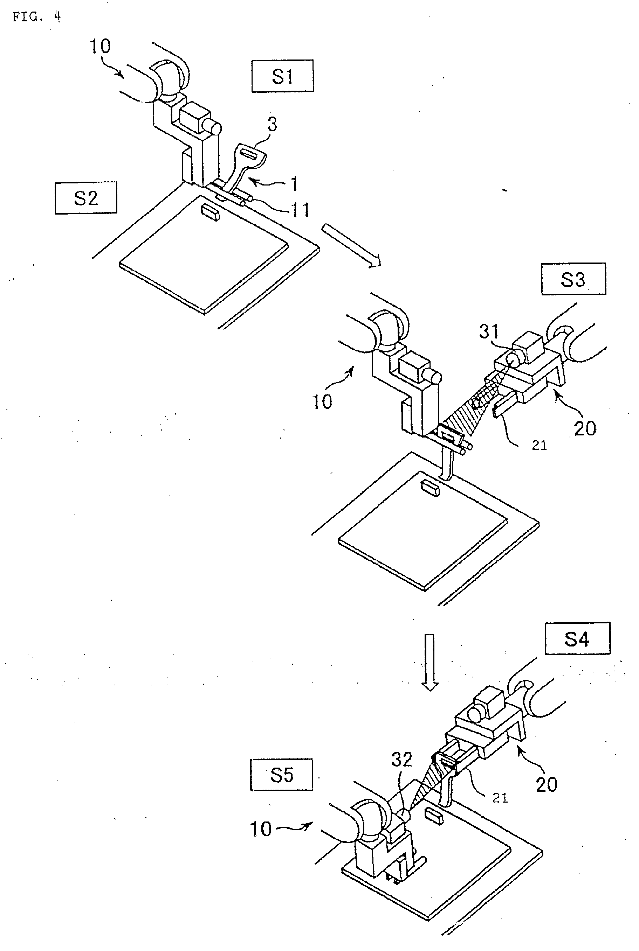

First, the procedure for performing the inspection of the connector 3 will be described with reference to FIG. 4. In FIG. 4, the procedure and the operation step for performing the inspection of the connector 3 are shown by arrow marks and reference characters S1 to S4. The essential points of respective operation steps are as follows.

Step S1: (The tool center point H of) the first hand 11 is moved to the point P1 by the operation of the first robot 10, and an intermediate portion of the cable 1 with connector is pinched by the gripping unit comprising a pair of rolls 11r and 11r.

Step S2: Pinching the intermediate portion of the cable 1 with connector by the gripping unit comprising a pair of rolls 11r and 11r, the first hand 11 is moved to the point P2 by the operation of the first robot 10. In this way, the connector 3 is fixed approximately to a home position. In other words, an instability of the position and posture of the connector 3 is remarkably reduced.

Step S3: An imaging command is sent from the visual sensor control unit 30 to the first camera 31, and the image in which the fixed connector 3 is brought into a fieldof view is obtained, and more accurate position and posture of (the point P3 of) the connector 3 are found.

Step S4: (The tool center point K) of the second hand 21 is moved to "the corrected point P3" by the operation of the second robot 20, and the connector 3 is gripped at an outer periphery thereof by the second hand 21. Here, "the corrected point P3" represents the position and posture where point P3 is corrected based on the position and posture of the connector 3 obtained at Step S3.

In the case where the cable 1 with connector is tabular, gripping at Step S1 is carried out with the gripped cable 1 with connector "facing upward" (facing as shown in FIG. 2) or "facing downward" (facing turned over from the state of FIG. 2), so that processing at Step S3 may find whether the cable 1 with connector faces upward or downward, and the result may be used in processing at Step S4. In that case, if the cable 1 with connector faces downward, the second hand 21 will assume a gripping posture turned over by 180 degrees about a wrist axis.

Step S5: The imaging command is sent fromthe visual sensor control unit 30 to the second camera 32, and the image in which the connector 3 gripped by the second hand 21 at the outer periphery portion is brought into a field of view is obtained, and the inspection of the connector 3 is carried out. The inspection is, for example, made on the abnormality of the shape, the abnormality of the dimension, and the like. The software for such an inspection is publicly known, and therefore, the description thereof will be omitted.

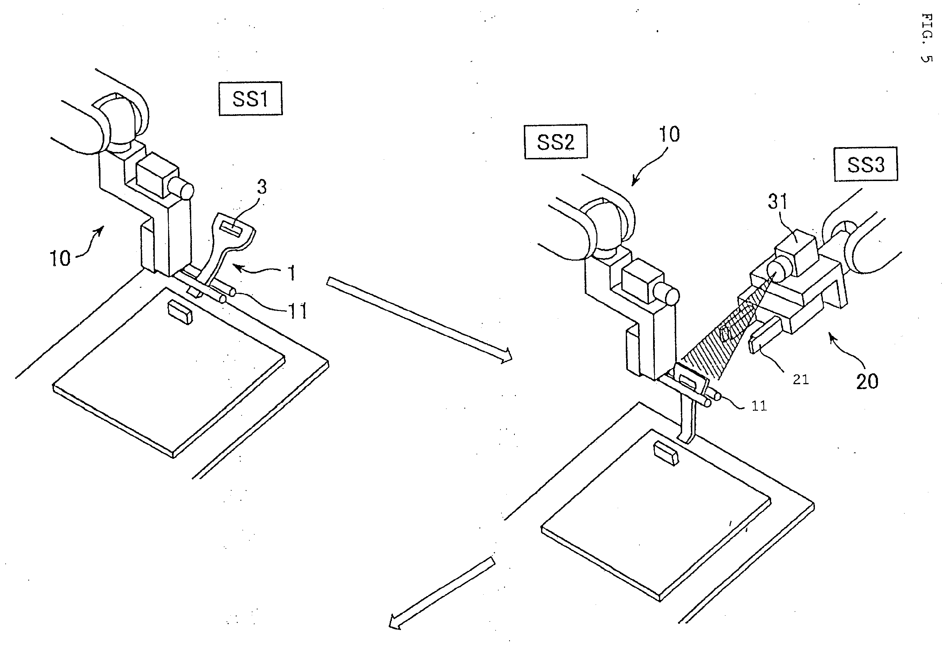

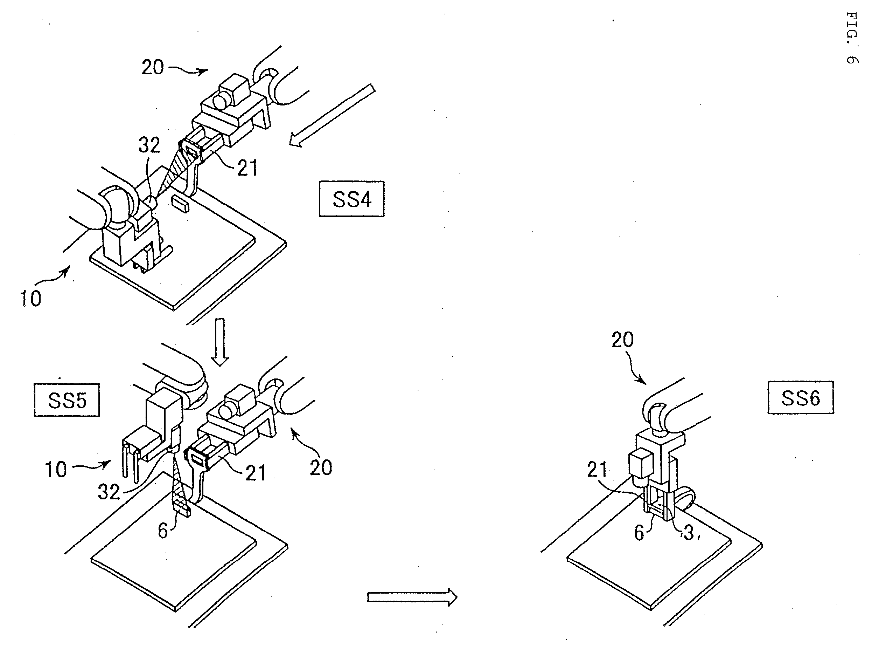

Next, the procedure of the operation to connect the connector 3 to the companion connector 6 will be described with reference to FIGS. 5 and 6. From FIGS. 5 to 6, the procedures and operation steps for carrying out inspection of the connector 3 are shown by the arrow marks and reference characters SS1 to SS6. The essential points of respective operation steps are as follows.

Step SS1: (The tool center point H) of the first hand 11 is moved to the point P1 by the operation of the first robot 10, and an intermediate portion of the cable 1 with connector is pinched by the gripping unit comprising a pair of rolls.

Step SS2: Pinching the intermediate portion of the cable 1 with connector by the gripping unit comprising a pair of rolls 11r and 11r, the first hand 11 is moved to the point P2 by the operation of the first robot 10. In this way, the connector 3 is fixed almost at a home position. In other words, an instability of the position and posture of the connector 3 is remarkably reduced.

Step SS3: The imaging command is sent to from the visual sensor control unit 30 to the first camera 31, and the image in which the fixed connector 3 is brought into a field of view is obtained, and more accurate position and posture of the connector 3 (the point P3) are found.

Step SS4: (The tool center point K) of the second hand 21 is moved to "the corrected point P3" by the operation of the second robot 20, and the connector 3 is gripped at an outer periphery thereof by the second hand 21. Here, "the corrected point P3" represents the position and posture where point P3 is corrected based on the position and posture of the connector 3 obtained at Step S3.

In the case where the cable 1 with connector is tabular, gripping at Step SS1 is carried out with the gripped cable 1 with connector "facing upward" (facing as shown in FIG. 2) or "facing downward" (facing turned over from the state of FIG. 2), in a similar way as in the case of inspection operation as described above, so that processing at Step SS3 may find whether the cable 1 with connector faces upward or downward, and the result may be used in processing at Step SS4. In that case, if the cable 1 with connector faces downward, the second hand 21 will assume a grippingposture turnedoverby 180 degrees about a wrist axis.

Step SS5: The imaging command is sent from the visual sensor control unit 30 to the second camera 32, and the image in which the connector 3 gripped by the second hand 21 at the outer periphery portion is brought into a field of view is obtained, and the position and posture of the connector 3 is detected. This detected data includes the data representing the position and posture of the portion which engages with the companion connector 6. Further, the imaging command is sent from the visual sensor control unit 30 to the second camera 32, and the image in which the companion connector 6 is brought into a field of view is obtained, and the position and posture of the companion connector 6 is detected. This detected data includes the data representing the position and posture of the portion of the companion connector 6 which engages with the connector 3.

Step SS6: The second robot 20 is moved by using the data obtained at Step SS5, and the connector 3 gripped by the second hand 21 is connected to the companion connector 6. When the connection is completed, the gripping state is released by means of the second hand 21, and the second robot 20 is allowed to retreat. Also, the first robot 10 is allowed to retreat at an appropriate time (for example, before the second robot 20 approaches the companion connector 6).

Heretofore, the position and posture of the connector of the cable with connector have not been settled, thereby making difficult automation of process for gripping connector. However, with the present invention, automation for accurately achieving this gripping operation is realized. Further, in association with the automation of this gripping, automation of connector inspection and connection operation with the companion connector are realized, thereby making it possible to realize the reduction in the man-power required for those operations and the stability of the operation quality.

## Claims

1. A connector gripping device for gripping a connector provided to a cable at the distal end thereof, comprising:
a gripping unit of a first hand mounted on a first robot, which, after gripping a portion of the cable, is moved toward the connector while gripping the cable and is stopped at a predetermined position;
a first visual sensor for detecting a position and posture of the connector assumed when the cable is held at said predetermined position by said gripping unit of said first hand; and
a gripping unit of a second hand mounted on a second robot, which grips the connector based on the position and posture of the connector detected by said first visual sensor.

2. The connector gripping device according to claim 1, wherein, in the case where the shape of said cable is tabular so that the position and posture of the connector held at said predetermined position is approximately limited to a first position and posture or a second position and posture in connection with the direction of said tabular cable,
wherein said first visual sensor determines whether said connector is approximately in said first position and posture or in said second position and posture.

3. The connector gripping device according to claim 1, wherein the gripping unit of said first hand comprises two pieces of rollers.

4. The connector gripping device according to claim 1, wherein said first visual sensor has an imaging unit mounted on said second robot.

5. A connector inspection system, which grips and inspects a connector, provided to a cable at a distal end thereof, by means of the connector gripping device according to any one of claims 1 to 4, comprising:
a second visual sensor for inspecting the connector gripped by said connector gripping device.

6. The connector inspection system according to claim 5, wherein the imaging unit of said second visual sensor is mounted on the first robot constituting said connector gripping device.

7. The connector inspection system according to claim 5, wherein said second visual sensor is controlled by the same control unit as that of the first visual sensor constituting said connector gripping device.

8. A connector connection system for gripping a connector, provided to a cable at a distal end thereof, by means of the connector gripping device according to any one of claims 1 to 4 and connecting it to a companion connector, comprising:
a second visual sensor for detecting the position and posture of the connector gripped by said connector gripping device;
a gripping discrepancy calculating means for finding a connector gripping discrepancy caused by the second hand constituting said connector gripping device based on the position and posture of the connector detected by said second visual sensor; and
a connectingmeans for correcting the position andposture of said second robot based on the amount of the gripping discrepancy detected by said gripping discrepancy calculating means and then connecting the connector gripped by said connector gripping device to a companion connector by means of the second hand.

9. The connector connection system according to claim 8, wherein the connector gripping discrepancy causedby the second hand is found based on the position and posture of the connector detected by said second visual sensor and the position and posture of the second hand which grips the connector.

10. The connector connection system according to claim 8, wherein said second visual sensor has an imaging unit mounted on said first robot.

11. The connector connection system according to claim 8, further comprising a third visual sensor for detecting the position and posture of said companion connector, wherein the position and posture of the connector detected by said second visual sensor is taken as the position and posture of the companion connector detected by said third visual sensor.

12. The connector connection system according to claim 11, wherein said second visual sensor serves as said third visual sensor.

13. The connector connection system according to claim 8, wherein said second visual sensor and third visual sensor are controlled by the same control unit as that of the first visual sensor constituting said connector gripping device.

14. A method of gripping a connector provided to a cable at the distal end thereof, comprising:
gripping a portion of the cable by a gripping unit of a first hand mounted on a first robot;
moving the gripping unit toward the connector while gripping the cable and stopping the gripping unit at a predetermined position;
detecting, by a first visual sensor, a position and posture of the connector assumed when the cable is held at said predetermined position by said gripping unit of said first hand; and
gripping the connector, by a gripping unit of a second hand mounted on a second robot, based on the position and posture of the connector detected by said first visual sensor.
